(19) **Europäisches Patentamt / European Patent Office / Office européen des brevets**

(11) **EP 4 700 613 A1**

(12) **EUROPEAN PATENT APPLICATION**
published in accordance with Art. 153(4) EPC

(43) Date of publication:
**25.02.2026 Bulletin 2026/09**

(21) Application number: **23933758.7**

(22) Date of filing: **23.10.2023**

(51) International Patent Classification (IPC):
*G06F 18/2433* (2023.01)

(52) Cooperative Patent Classification (CPC):
Y02E 30/30

(86) International application number:
**PCT/CN2023/125870**

(87) International publication number:
**WO 2024/216890 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2023 CN 202310459222**

(71) Applicants:
• **China Nuclear Power Technology Research Institute Co., Ltd.**
  **Shenzhen, Guangdong 518031 (CN)**
• **China General Nuclear Power Corporation**
  **Shenzhen, Guangdong 518028 (CN)**
• **CGN Power Co., Ltd**
  **Shenzhen, Guangdong 518028 (CN)**

(72) Inventors:
• **LI, Wenhuai**
  **Shenzhen, Guangdong 518031 (CN)**

• **DING, Peng**
  **Shenzhen, Guangdong 518031 (CN)**
• **LI, Hansheng**
  **Shenzhen, Guangdong 518031 (CN)**
• **HU, Shuowen**
  **Shenzhen, Guangdong 518031 (CN)**
• **CHEN, Shu**
  **Shenzhen, Guangdong 518031 (CN)**
• **LIU, Min**
  **Shenzhen, Guangdong 518031 (CN)**
• **YU, Fengwan**
  **Shenzhen, Guangdong 518031 (CN)**
• **XIA, Wenqing**
  **Shenzhen, Guangdong 518031 (CN)**
• **CUI, Dawei**
  **Shenzhen, Guangdong 518031 (CN)**
• **DUAN, Chengjie**
  **Shenzhen, Guangdong 518031 (CN)**

(74) Representative: **Zacco Sweden AB**
**P.O. Box 5581**
**Löjtnantsgatan 21**
**114 85 Stockholm (SE)**

(54) **NUCLEAR REACTOR FAULT DIAGNOSIS METHOD AND APPARATUS, COMPUTER DEVICE, AND STORAGE MEDIUM**

(57)     The present application relates to a nuclear reactor fault diagnosis method and apparatus, a computer device, and a storage medium. The method includes: obtaining system simulation operation data of a nuclear reactor under different candidate operating conditions (S201); determining norm values corresponding to respective types of fault operating conditions based on the system simulation operation data (S202); in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold (S203); and performing fault diagnosis on a current operating condition of the nuclear reactor based on the processed system simulation operation data and current system operation data of the nuclear reactor under the current operating condition (S204). By means of said method, the sensitivity and accuracy of fault diagnosis of a nuclear reactor can be improved. The above method can improve the sensitivity and accuracy of nuclear reactor fault diagnosis.

EP 4 700 613 A1

Obtaining system simulation operation data of a nuclear reactor under different candidate operating conditions  —— S201

Determining norm values corresponding to respective types of fault operating conditions based on the system simulation operation data  —— S202

In response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold  —— S203

Performing fault diagnosis on a current operating condition of the nuclear reactor based on the processed system simulation operation data and current system operation data of the nuclear reactor under the current operating condition  —— S204

FIG. 2

**Description**

**CROSS-REFERENCE TO RELATED APPLICATIONS**

The present application claims priority to Chinese patent application No. 202310459222.9, titled "NUCLEAR REACTOR FAULT DIAGNOSIS METHOD AND APPARATUS, COMPUTER DEVICE, AND STORAGE MEDIUM", filed on April 19, 2023, the entire content of which is incorporated herein by reference.

**TECHNICAL FIELD**

The present application relates to the field of nuclear energy technologies, and in particular, to a nuclear reactor fault diagnosis method and apparatus, a computer device, and a storage medium.

**BACKGROUND**

With the social development and technological progress, conventional energy has gradually faded from the historical stage, while nuclear energy has gradually become the main source of modern energy. As the production site of the nuclear energy, the normal operation of nuclear power plants is an important guarantee for the normal supply of energy. However, nuclear power plant systems are very complex and have a lot of operating data. Once a fault occurs, if the fault cannot be quickly diagnosed and located, it is very likely that the city will fall into a situation of insufficient energy supply.
However, current nuclear power plant fault diagnosis methods have low sensitivity and can only diagnose faults with large fluctuations in the operating data (such as large break or rod drop accidents). Some nuclear power plant faults cause smaller fluctuations in the operating data, so these faults cannot be detected effectively. Furthermore, due to the complexity of the nuclear power plant systems, the current nuclear power plant fault diagnosis methods struggle to determine the specific causes of the faults, resulting in low maintenance efficiency after the nuclear power plant faults occur. Therefore, how to increase the sensitivity and accuracy of fault diagnosis in the nuclear power plants, thereby increasing the maintenance efficiency of the nuclear power plant faults, has become an urgent problem to be solved.

**SUMMARY**

Based on this, to address the above technical problems, it is necessary to provide a nuclear reactor fault diagnosis method and apparatus, a computer device, and a storage medium that can increase the sensitivity and accuracy of fault diagnosis in the nuclear power plants.
In a first aspect, the present application provides a nuclear reactor fault diagnosis method, including:

obtaining system simulation operation data of a nuclear reactor under different candidate operating conditions, wherein the candidate operating conditions include one or more types of fault operating conditions;
determining norm values corresponding to respective types of fault operating conditions based on the system simulation operation data;
in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and
performing fault diagnosis on a current operating condition of the nuclear reactor based on the processed system simulation operation data and current system operation data of the nuclear reactor under the current operating condition.

In an embodiment, the candidate operating conditions further include a normal operating condition, the system simulation operation data includes measurement data of at least one dimension, and determining the norm values corresponding to the types of fault operating conditions based on the system simulation operation data includes:

determining an average value and a standard deviation of the measurement data of each dimension under the normal operating condition based on the system simulation operation data of the nuclear reactor under the normal operating condition;
performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

determining the norm value corresponding to each type of fault operating condition based on the normalized data of each dimension under each type of fault operating condition.

In an embodiment, performing the feature engineering processing on the system simulation operation data includes:

performing feature dimensionality increase and/or feature transformation processing on the system simulation operation data.

In an embodiment, performing the fault diagnosis on the current operating condition of the nuclear reactor based on the processed system simulation operation data and the current system operation data of the nuclear reactor under the current operating condition includes:

determining a squared prediction error confidence limit and a Hotelling statistic confidence limit based on the processed system simulation operation data;

performing a feature engineering processing on the current system operation data of the nuclear reactor under the current operating condition, and determining a current squared prediction error statistic and a current Hotelling statistic based on the processed current system operation data, wherein the feature engineering processing is performed on the system simulation operation data in the same manner as on the current system operation data; and

performing the fault diagnosis on the current operating condition of the nuclear reactor based on the current squared prediction error statistic, the current Hotelling statistic, the squared prediction error confidence limit and the Hotelling statistic confidence limit.

In an embodiment, determining the squared prediction error confidence limit and the Hotelling statistic confidence limit based on the processed system simulation operation data includes:

constructing a simulation covariance matrix based on measurement data of each dimension under a normal operating condition in the processed system simulation operation data;

determining initial eigenvalues of the simulation covariance matrix;

determining a data dimensionality reduction dimension based on a relationship between the initial eigenvalues and a contribution rate threshold;

determining a target eigenvalue from the initial eigenvalues based on the data dimensionality reduction dimension;

determining the squared prediction error confidence limit based on the target eigenvalue and a normal distribution value under a preset confidence level; and

determining the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

In an embodiment, determining the current squared prediction error statistic and the current Hotelling statistic based on the processed current system operation data includes:

constructing a diagonal matrix based on the initial eigenvalues and the data dimensionality reduction dimension;

determining eigenvectors corresponding to the initial eigenvalues, and determining a loading matrix based on the eigenvectors and the data dimensionality reduction dimension;

determining the current squared prediction error statistic based on the processed current system operation data, the loading matrix, and an identity matrix; and

determining the current Hotelling statistic based on the processed current system operation data, the loading matrix, and the diagonal matrix.

In an embodiment, performing the fault diagnosis on the current operating condition of the nuclear reactor based on the current squared prediction error statistic, the current Hotelling statistic, the squared prediction error confidence limit, and the Hotelling statistic confidence limit includes:

in a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition;

determining a contribution value of measurement data of each dimension in the processed current system operation data based on the current system operation data before processing and the processed current system operation data;

and

determining a fault cause corresponding to the fault operating condition based on the contribution value of the measurement data of each dimension in the processed current system operation data.

In an embodiment, determining the contribution value of the measurement data of each dimension in the processed current system operation data based on the current system operation data before processing and the processed current system operation data includes:

determining a reconstruction value corresponding to the measurement data of each dimension in the processed current system operation data based on the current system operation data before processing and the processed current system operation data;
determining a residual value corresponding to the measurement data of each dimension in the processed current system operation data based on the current system operation data before processing and the reconstruction value corresponding to the measurement data of each dimension in the processed current system operation data; and
determining the contribution value corresponding to the measurement data of each dimension in the processed current system operation data based on the residual value corresponding to the measurement data of each dimension in the processed current system operation data.

In an embodiment, determining the fault cause corresponding to the fault operating condition based on the contribution value of the measurement data of each dimension in the processed current system operation data includes:

determining a contribution value corresponding to the measurement data of each dimension in the current system operation data before processing based on the contribution value corresponding to the measurement data of each dimension in the processed current system operation data; and
determining the fault cause corresponding to the fault operating condition based on the contribution value corresponding to the measurement data of each dimension in the current system operation data before processing.

In a second aspect, the present application further provides a nuclear reactor fault diagnosis apparatus, including:

a data obtaining module configured to obtain system simulation operation data of a nuclear reactor under different candidate operating conditions, wherein the candidate operating conditions include one or more types of fault operating conditions;
a value determination module configured to determine norm values corresponding to respective types of fault operating conditions based on the system simulation operation data;
a feature processing module configured to in response to presence of any norm value among the norm values corresponding to the types of fault operating conditions being less than a preset norm threshold, perform a feature engineering processing on the system simulation operation data, and re-determine the norm values corresponding to the types of fault operating conditions based on the processed system simulation operation data until the norm values corresponding to the types of fault operating conditions are all greater than or equal to the preset norm threshold; and
a fault diagnosis module configured to perform fault diagnosis on a current operating condition of the nuclear reactor based on the processed system simulation operation data and current system operation data of the nuclear reactor under the current operating condition.

In a third aspect, the present application further provides a computer device. The computer device includes a memory and a processor, and the memory stores a computer program. The processor, when executing the computer program, performs the following steps:

obtaining system simulation operation data of a nuclear reactor under different candidate operating conditions, wherein the candidate operating conditions include one or more types of fault operating conditions;
determining norm values corresponding to respective types of fault operating conditions based on the system simulation operation data;
in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and
performing fault diagnosis on a current operating condition of the nuclear reactor based on the processed system simulation operation data and current system operation data of the nuclear reactor under the current operating condition.

In a fourth aspect, the present application further provides a computer-readable storage medium, having a computer program stored thereon. The computer program, when executed by a processor, causes the processor to perform the following steps:

obtaining system simulation operation data of a nuclear reactor under different candidate operating conditions, wherein the candidate operating conditions include one or more types of fault operating conditions;

determining norm values corresponding to respective types of fault operating conditions based on the system simulation operation data;

in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and

performing fault diagnosis on a current operating condition of the nuclear reactor based on the processed system simulation operation data and current system operation data of the nuclear reactor under the current operating condition.

In a fifth aspect, the present application further provides a computer program product, including a computer program. The computer program, when executed by a processor, causes the processor to perform the following steps:

obtaining system simulation operation data of a nuclear reactor under different candidate operating conditions, wherein the candidate operating conditions include one or more types of fault operating conditions;

determining norm values corresponding to respective types of fault operating conditions based on the system simulation operation data;

in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and

performing fault diagnosis on a current operating condition of the nuclear reactor based on the processed system simulation operation data and current system operation data of the nuclear reactor under the current operating condition.

In the above nuclear reactor fault diagnosis method and apparatus, the computer device, and the storage medium, the norm values corresponding to the types of fault operating conditions are determined based on the system simulation operation data of the nuclear reactor under different operating conditions, and the feature engineering processing is performed on the system simulation operation data based on the norm values, thereby performing the fault diagnosis on the nuclear reactor based on the processed system simulation operation data and the current system operation data of the nuclear reactor under the current operating condition. The feature engineering processing can amplify the norm values corresponding to the types of fault operating conditions, so that the nuclear reactor fault with a large fluctuation in the operation data can be diagnosed, and the nuclear reactor fault with a small fluctuation in the operation data can also be diagnosed, greatly increasing the sensitivity of nuclear reactor fault detection. In the method of determining the fault based on the processed system simulation operation data and the current system operation data of the nuclear reactor under the current operating condition, comparing the current system operation data with the simulation operation data is equivalent to comparing the current system operation data with a template, which greatly increases the accuracy of fault diagnosis.

## BRIEF DESCRIPTION OF THE DRAWINGS

In order to describe the technical solutions of the embodiments of the present application or the conventional art more clearly, the accompanying drawings required for describing the embodiments or for describing the conventional art will be briefly introduced as follows. Apparently, the accompanying drawings, in the following description, illustrate merely some embodiments of the present application, and for a person of ordinary skill in the art, other drawings can also be obtained according to these accompanying drawings without making any creative efforts.

FIG. 1 is a diagram illustrating an application environment of a nuclear reactor fault diagnosis method in an embodiment.

FIG. 2 is a flow chart of a nuclear reactor fault diagnosis method in an embodiment.

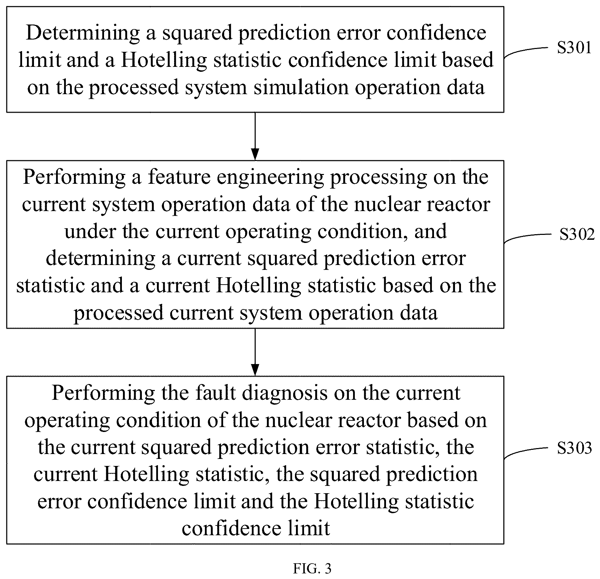

FIG. 3 is a flow chart of a method for performing fault diagnosis on a current operating condition of a nuclear reactor in an embodiment.

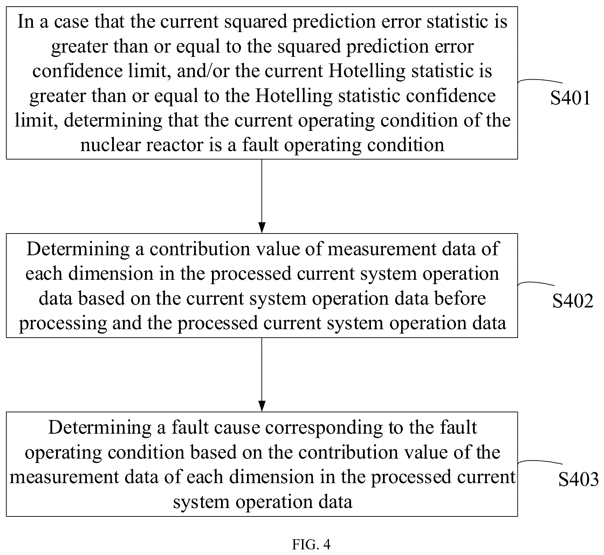

FIG. 4 is a flow chart of a method for determining a fault cause corresponding to a fault operating condition in an embodiment.

FIGS. 5A and 5B are flowcharts of a nuclear reactor fault diagnosis method in another embodiment.

FIG. 6 is a block diagram illustrating a configuration of a nuclear reactor fault diagnosis apparatus in an embodiment.

FIG. 7 is a block diagram illustrating a configuration of a nuclear reactor fault diagnosis apparatus in another embodiment.

FIG. 8 is a block diagram illustrating a configuration of a nuclear reactor fault diagnosis apparatus in another embodiment.

FIG. 9 is diagram illustrating an internal configuration of a computer device in an embodiment.

## DETAILED DESCRIPTION OF THE EMBODIMENTS

In order to make the objectives, technical solutions and advantages of the present application more clearly understood, the present application will be further described in detail with the accompanying drawings and embodiments. It should be understood that the specific embodiments described herein are only used to explain the present application and not to limit the present application.

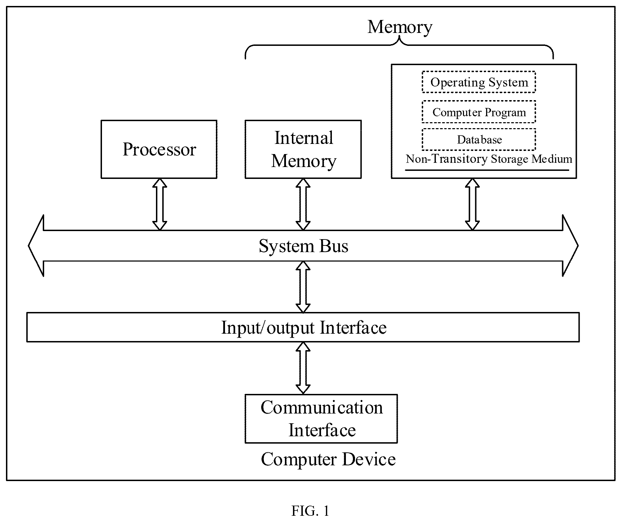

The nuclear reactor fault diagnosis method provided in embodiments of the present application can be applied to an application environment shown in FIG. 1. In an embodiment, a computer device is provided, which may be a server. A diagram illustrating an internal configuration of the computer device may be shown in FIG. 1. The computer device includes a processor, a memory, and a network interface connected via a system bus. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is configured to store the data required for related processing. The network interface of the computer device is configured to communicate with external terminals via a network connection. The computer program is executed by the processor in order to implement a nuclear reactor fault diagnosis method as shown in any of the following embodiments.

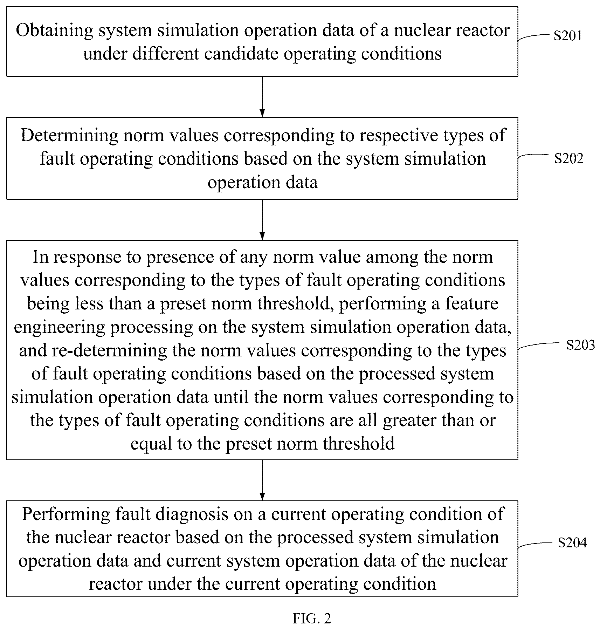

In an embodiment, as shown in FIG. 2, a nuclear reactor fault diagnosis method is provided, which is described by taking its application to the computer device in FIG. 1 as an example. The method includes the following steps.

In the step S201, system simulation operation data of a nuclear reactor under different candidate operating conditions is obtained.

The candidate operating conditions include one or more types of fault operating conditions. Depending on different circumstances, the candidate operating conditions may further include a normal operating condition. The system simulation operation data may include nuclear density, temperature distribution and other data.

Optionally, simulation tests can be performed on the nuclear reactor system under different operating conditions using simulation software, and simulation results, i.e., the system simulation operation data, can be stored in the storage system of the server. The system simulation operation data of the nuclear reactor under different candidate operating conditions can be directly retrieved from the storage system of the server.

In the step S202, norm values corresponding to respective types of fault operating conditions are determined based on the system simulation operation data.

The norm value indicates a degree of deviation of current system simulation operation data from normal system simulation operation data. The norm value corresponding to the normal system simulation operation data is around 1.0, while the norm value corresponding to fault system simulation operation data is greater than 1.0. The greater the norm value, the greater the degree of deviation of the current system simulation operation data from the normal system simulation operation data, i.e., the more obvious the fault.

Specifically, the system simulation operation data corresponding to each type of fault operating condition can be substituted into the norm value calculation formula, so as to calculate the norm value corresponding to each type of fault operating condition.

Optionally, in a case that the candidate operating conditions further include the normal operating condition, and the system simulation operation data includes measurement data of at least one dimension, another implementation manner of determining the norm values corresponding to the types of fault operating conditions is as follows: determining an average value and a standard deviation of the measurement data of each dimension under the normal operating condition based on the system simulation operation data of the nuclear reactor under the normal operating condition;

performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and determining the norm value corresponding to each type of fault operating condition based on the normalized data of each dimension under each type of fault operating condition.

Specifically, the system simulation operation data of the nuclear reactor under the normal operating condition is substituted into the average value calculation formula and the standard deviation calculation formula respectively, to obtain the average value and the standard deviation of the measurement data of each dimension under the normal operating condition. The obtained average value and the standard deviation of the measurement data of each dimension under the normal operating condition are then substituted into the following formula (1) to perform the normalization processing on the measurement data of each dimension of the nuclear reactor under each type of fault operating condition, and the formula (1) is as follows:

$$\hat{x}_{i,j} = \frac{(X_{i,j} - mean_j)}{std_j} \quad (1),$$

where $X_{i,j}$ is the j-th measured parameter in the i-th sample, $mean_j$ is the average value of the j-th measured parameter under the normal operating condition, $std_j$ is the standard deviation of the j-th measured parameter under the normal operating condition, and $\hat{x}_{i,j}$ is the normalized data of the j-th measured parameter in the i-th sample.

Then the normalized measurement data of each dimension of the nuclear reactor under each type of fault operating condition is substituted into the following formula (2) to calculate the norm value corresponding to each type of fault operating condition, and the formula (2) is as follows:

$$L_{2,k} = \sqrt{\sum_{i=1}^{i \in S_k} \sum_{j}^{M} (\hat{x}_{i,j})^2}, k = 1 \quad (2),$$

where $S_k$ is a sample dataset belonging to the k-th type of fault, there are M detector measurements to represent the current state, $\hat{x}_{i,j}$ is the normalized data of the j-th measured parameter in the i-th sample, and $L_{2,k}$ is the norm value corresponding to the k-th type of fault.

In the step S203, in response to presence of any norm value among the norm values corresponding to the types of fault operating conditions being less than a preset norm threshold, a feature engineering processing is performed on the system simulation operation data, and the norm values corresponding to the types of fault operating conditions are re-determined based on the processed system simulation operation data until the norm values corresponding to the types of fault operating conditions are all greater than or equal to the preset norm threshold.

The preset norm threshold can be adjusted according to requirements. The greater the preset norm threshold, the more obvious the deviation of the norm value corresponding to the fault operating condition, i.e., the higher the fault detection sensitivity.

Optionally, in response to the presence of any norm value among the norm values corresponding to the types of fault operating conditions being less than the preset norm threshold, it indicates that the current fault detection sensitivity is too low to effectively detect minor faults. In this case, the feature engineering processing can be performed on the system simulation operation data to amplify the norm value corresponding to each type of fault operating condition, and the specific method includes: performing feature dimensionality increase and/or feature transformation processing on the system simulation operation data. The method for performing feature dimensionality increase processing on the system simulation operation data includes a polynomial dimensionality increase method and a Gaussian kernel function dimensionality increase method. For example, the process of the polynomial dimensionality increase method can be as follows. The system simulation operation data has two feature variables in an original feature space $(x_1, x_2)$, with a dimension of two, and when performing a second-order polynomial, a new feature space is denoted as $Z = (x_1, x_2, x_1^2, x_2^2, x_1 x_2)$, with five new feature variables and a dimension of five. Optionally, the order can also be set to 2, 3, 4, or other higher-order dimension expansions as needed. The process of the Gaussian kernel function dimensionality increase method can be achieved by performing a higher-order extension based on the Gaussian kernel function in the original feature space.

The method for performing feature transformation processing on the system simulation operation data includes an exponential feature transformation method or a logarithmic feature transformation method. For example, the process of the exponential feature transformation method can be to transform the original 2D feature space $(x_1, x_2)$ of the system simulation operation data into a new 2D feature space $Z$, such as $Z = (z_1, z_2) = (e^{x1}, e^{x2})$. The process of the logarithmic feature transformation method can be to transform the original 2D feature space $(x_1, x_2)$ of the system simulation operation data into a new 2D feature space $Z$, such as $Z = (z_1, z_2) = (log\ 1\ p(x_1),\ log\ 1\ p(x_2))$.

After performing the feature engineering processing on the system simulation operation data, the step S202 of determining the norm values corresponding to the types of fault operating conditions is performed again. After re-determining the norm values for the types of fault operating conditions, the re-determined norm values are compared with the preset norm threshold again. If there is still a case that the norm value is less than the preset norm threshold, the feature engineering processing is performed on the system simulation operation data again, and the above process is repeated until there is no case that the norm value is less than the preset norm threshold. In other words, the norm values corresponding to the types of fault operating conditions are all greater than or equal to the preset norm threshold.

In the step S204, fault diagnosis is performed on a current operating condition of the nuclear reactor based on the processed system simulation operation data and current system operation data of the nuclear reactor under the current operating condition.

Optionally, a mapping table relating the system simulation operation data and the current system operation data of the nuclear reactor under the current operating condition to fault types can be determined in advance. The processed system simulation operation data is compared with the current system operation data of the nuclear reactor under the current operating condition to determine the processed system simulation operation data that differs significantly from the current system operation data of the nuclear reactor under the current operating condition. Then, according to the determined processed system simulation operation data with a significant difference, a fault type of the nuclear reactor under the current operating condition can be determined by looking up the table.

In the above embodiments, the norm values corresponding to the types of fault operating conditions are determined based on the system simulation operation data of the nuclear reactor under different operating conditions, and the feature engineering processing is performed on the system simulation operation data based on the norm values, thereby performing the fault diagnosis on the nuclear reactor based on the processed system simulation operation data and the current system operation data of the nuclear reactor under the current operating condition. The feature engineering processing can amplify the norm values corresponding to the types of fault operating conditions, so that the nuclear reactor fault with a large fluctuation in the operation data can be diagnosed, and the nuclear reactor fault with a small fluctuation in the operation data can also be diagnosed, greatly increasing the sensitivity of nuclear reactor fault detection. In the method of determining the fault based on the processed system simulation operation data and the current system operation data of the nuclear reactor under the current operating condition, comparing the current system operation data with the simulation operation data is equivalent to comparing the current system operation data with a template, which greatly increases the accuracy of fault diagnosis.

On the basis of the above embodiments, to further improve the accuracy of nuclear reactor fault location, it is necessary to perform the fault diagnosis on the current operating condition of the nuclear reactor based on a current squared prediction error statistic, a current Hotelling statistic, a squared prediction error confidence limit, and a Hotelling statistic confidence limit, and the method specifically includes the following steps.

In the step S301, a squared prediction error confidence limit and a Hotelling statistic confidence limit are determined based on the processed system simulation operation data.

The confidence limit represents a probability that predicted data falls within a certain range.

Specifically, the system simulation operation data after feature engineering is substituted into the formulas for calculating the squared prediction error confidence limit and the Hotelling statistic confidence limit, respectively, to obtain the squared prediction error confidence limit and the Hotelling statistic confidence limit.

Optionally, one implementation manner of calculating the squared prediction error confidence limit and the Hotelling statistic confidence limit is as follows. A simulation covariance matrix is constructed based on measurement data of each dimension under a normal operating condition in the processed system simulation operation data. Assuming that the processed system simulation operation data is denoted as ($z_i$, $z_j$), its covariance is calculated as follow the following formula (3):

$$cov\left(z_i, z_j\right) = \frac{1}{s_0-1}\sum_{k=1}^{S_0}(z_{ki} - z_i)\left(z_{kj} - z_j\right) \quad (3),$$

where $z_i = \frac{\sum_{k=1}^{S_0}(z_{ki})}{s_0}$, $z_j = \frac{\sum_{k=1}^{S_0} z_{kj}}{s_0}$, $s_0$ represents the number of samples of the measurement data of each dimension under the normal operating condition, $z_{ki}$ is the i-th measurement parameter in the k-th sample, $z_{kj}$ is the j-th measurement parameter in the k-th sample, and ($z_i$, $z_j$) are the i-th and j-th measurement parameter values in the processed system simulation operation data.

The covariance matrix is then constructed by using the covariances of the measurement data of respective dimensions, as shown in the following formula (4):

$$covZ = \begin{vmatrix} cov(z_1, z_1) & \cdots & cov(z_1, z_n) \\ \vdots & \ddots & \vdots \\ cov(z_n, z_1) & \cdots & cov(z_n, z_n) \end{vmatrix} \quad (4),$$

where $n$ is the dimension of the system simulation operation data after feature engineering in the new feature space.

Then, initial eigenvalues of the simulation covariance matrix are determined, and the specific calculation formula (5) is as follows:

$$|\lambda I - cov Z| = 0 \quad (5),$$

where $\lambda$ is the initial eigenvalue of the covariance matrix, and $I$ is an identity matrix.

After calculating the initial eigenvalues, the initial eigenvalues are arranged in a descending order, denoted as $\lambda_1 > \lambda_2 > ... > \lambda_n$.

A data dimensionality reduction dimension is determined based on a relationship between the initial eigenvalues and a contribution rate threshold, and the specific calculation formula (6) is as follows:

$$\frac{\sum_{i=1}^{k} \lambda_i}{\sum_{i=1}^{n} \lambda_i} \geq \theta; \frac{\sum_{i=1}^{k-1} \lambda_i}{\sum_{i=1}^{n} \lambda_i} < \theta \quad (6),$$

where $\lambda_i$ is the i-th eigenvalue, $k$ is the dimension of the sample after dimensionality reduction, and $\theta$ is the contribution rate threshold, which can be adjusted by a person, such as: $\theta = 0.85$ or $\theta = 0.95$.

A target eigenvalue is determined from the initial eigenvalues based on the data dimensionality reduction dimension, and the squared prediction error confidence limit is determined based on the target eigenvalue and a normal distribution value under a preset confidence level, and the specific calculation formula (7) is as follows:

$$SPE_a = \theta_1 \left[ \frac{C_\alpha \sqrt{2\theta_2 h_0^2}}{\theta_1} + 1 + \frac{\theta_2 h_0 (h_0 - 1)}{\theta_1^2} \right]^{1/h_0} \quad (7),$$

where $h_0 = 1 - \frac{2\theta_1\theta_3}{3\theta_2^2}$, $\theta_i = \sum_{j=k+1}^{n} \lambda_j^i, i = 1,2,3$, $C_\alpha$ is the normal distribution value under the confidence level $1 - \alpha$, $\lambda_j$ is the j-th eigenvalue, $\theta_i$ is the sum of the i-th power of the j-th to n-th eigenvalues, and $SPE_a$ is the squared prediction error confidence limit.

The Hotelling statistic confidence limit is determined based on a number of the initial eigenvalues, a preset degree of freedom, and an F-distribution value that follows the preset degree of freedom under the preset confidence level, and the specific calculation formula (8) is as follows:

$$T_a^2 = \frac{k(n^2-1)}{n(n-k)} F_\alpha(k, n - k) \quad (8),$$

where the preset degree of freedom is determined based on the number of the initial eigenvalues and the data dimensionality reduction dimension, $1 - \alpha$ is the confidence level, $F_\alpha(k, n - k)$ is the F distribution value that follows a first degree of freedom $k$ and a second degree of freedom $n - k$, $\alpha$ is typically set to 0.01, $n$ is the dimension of the system simulation operation data after feature engineering in the new feature space, $T_a^2$ is the Hotelling statistic confidence limit.

In the step S302, a feature engineering processing is performed on the current system operation data of the nuclear reactor under the current operating condition, and a current squared prediction error statistic and a current Hotelling statistic are determined based on the processed current system operation data.

Specifically, a normalization processing is performed on the current system operation data of the nuclear reactor under the current operating condition, and the processing refers to the formula (1), which is not be repeated here. Then the feature engineering processing is performed on the normalized current system operation data of the nuclear reactor under the current operating condition. The feature engineering processing is performed on the system simulation operation data in the same manner as on the current system operation data, so that the current squared prediction error statistic and the current Hotelling statistic are determined based on the processed current system operation data.

Optionally, a diagonal matrix is constructed based on the initial eigenvalues and the data dimensionality reduction dimension, and the specific calculation formula (9) is as follows:

$$S_{k \times k} = diag(\lambda_1, \lambda_2, \cdots, \lambda_k) \quad (9),$$

where $\lambda_k$ is the k-th eigenvalue, and $S_{k \times k}$ is the diagonal matrix.

Eigenvectors corresponding to the initial eigenvalues are determined, and a loading matrix is determined based on the eigenvectors and the data dimensionality reduction dimension, and the specific calculation formula (10) is as follows:

$$P_{m \times k} = [p_1, p_2, \cdots, p_k] \quad (10),$$

where $p_k$ is the eigenvector corresponding to the initial eigenvalue, and $P_{m \times k}$ is the loading matrix.

The current squared prediction error statistic is determined based on the processed current system operation data, the loading matrix, and an identity matrix, and the current Hotelling statistic is determined based on the processed current system operation data, the loading matrix, and the diagonal matrix, and the specific calculation formulas (11) and (12) are as follows:

$$SPE = x_{new,1 \times n} * (I_{n \times n} - P_{n \times k} * P_{n \times k}^T) * x_{new,1 \times n}^T \quad (11),$$

$$T^2 = x_{new,1 \times n} * P_{n \times k} * S_{k \times k}^{-1} * P_{n \times k}^T * x_{new,1 \times n}^T \quad (12),$$

where $x_{new}$ is a sample value of 1*m, $SPE$ is the current squared prediction error statistic, $T^2$ is the current Hotelling statistic, $P_{n \times k}$ is the loading matrix consisting of eigenvectors, $P_{n \times k}^T$ is the transpose matrix of the loading matrix consisting of eigenvectors, and $S_{k \times k}$ is the diagonal matrix.

In the step S303, the fault diagnosis is performed on the current operating condition of the nuclear reactor based on the current squared prediction error statistic, the current Hotelling statistic, the squared prediction error confidence limit and the Hotelling statistic confidence limit.

Specifically, the fault diagnosis can be performed on the current operating condition of the nuclear reactor based on a relationship between the current squared prediction error statistic, the current Hotelling statistic, the squared prediction error confidence limit, and the Hotelling statistic confidence limit.

In the above embodiments, the squared prediction error confidence limit and the Hotelling statistic confidence limit are determined based on the processed system simulation operation data, the current squared prediction error statistic and the current Hotelling statistic are determined based on the processed current system operation data, and finally, the fault diagnosis is performed on the current operating condition of the nuclear reactor based on the current squared prediction error statistic, the current Hotelling statistic, the squared prediction error confidence limit, and the Hotelling statistic confidence limit. This method for diagnosing faults according to multiple confidence limits significantly increases the accuracy of fault diagnosis.

On the basis of the previous embodiment, to further determine a fault cause, it is necessary to further determine the fault based on a contribution value of the measurement data of each dimension in the current system operation data, and the specific method is as follows:

In the step S401, in a case that the current squared prediction error statistic is greater than or equal to the squared prediction error confidence limit, and/or the current Hotelling statistic is greater than or equal to the Hotelling statistic confidence limit, it is determined that the current operating condition of the nuclear reactor is a fault operating condition.

Optionally, the conditions for determining that the current operating condition of the nuclear reactor is the fault operating condition in this embodiment may include the following three conditions, that is, condition 1: $T^2 < T_a^2$ and $SPE \geq SPE_a$, condition 2: $T^2 \geq T_a^2$ and $SPE < SPE_a$, condition 3: $T^2 \geq T_a^2$ and $SPE \geq SPE_a$, then the current operating condition of the nuclear reactor is determined to be the fault operating condition. Otherwise, if $T^2 < T_a^2$ and $SPE < SPE_a$, the current operating condition of the nuclear reactor is determined to be the normal operating condition.

In the step S402, a contribution value corresponding to measurement data of each dimension in the processed current system operation data is determined based on the current system operation data before processing and the processed current system operation data.

Specifically, according to a preset calculation formula of the contribution value, the contribution value corresponding to the measurement data of each dimension in the processed current system operation data can be calculated and obtained based on the current system operation data before processing and the processed current system operation data.

Optionally, one implementation manner of determining the contribution value is as follows. A reconstruction value corresponding to the measurement data of each dimension in the processed current system operation data is determined based on the current system operation data before processing and the processed current system operation data.

Specifically, assuming that the high-dimensional space of the input measurement is $x_{t,new,1\times n}$ at time $t$, and the j-th eigenvalue is $x_{t,j}$, the reconstruction value of the measurement after projection of the principal components is denoted as $\hat{x}_{t,new,1\times n} = x_{t,new,1\times n} * P_{n\times k} * P_{n\times k}^{T}$ , and the j-th reconstructed eigenvalue is $\hat{x}_{t,j}$.

A residual value corresponding to the measurement data of each dimension in the processed current system operation data is determined based on the current system operation data before processing and the reconstruction value corresponding to the measurement data of each dimension in the processed current system operation data, and the calculation formula (13) for the residual value is as follows:

$$e_{t,j} = \left(x_{t,j} - \hat{x}_{t,j}\right) \quad (13),$$

where $\hat{x}_{t,j}$ is the j-th eigenvalue after reconstruction, $x_{t,j}$ is the j-th eigenvalue before reconstruction, and $e_{t,j}$ is the residual value corresponding to the j-th measurement data in the processed current system operation data at time t.

The contribution value corresponding to the measurement data of each dimension in the processed current system operation data is determined based on the residual value corresponding to the measurement data of each dimension in the processed current system operation data, and the calculation formula (14) for the contribution value is as follows:

$$Cont(SPE)_{t,j} = \frac{e_{t,j}^2}{\sum_{j=1}^{n} e_{t,j}^2} \quad (14),$$

where $Cont(SPE)_{t,j}$ is the residual value corresponding to the measurement data of each dimension in the processed current system operation data, $t$ is the current time, j is the j-th eigenvalue, n is the dimension of the system simulation operation data after feature engineering in the new feature space, and $e_{t,j}$ is the residual value corresponding to the j-th measurement data in the processed current system operation data at time $t$.

In the step S403, a fault cause corresponding to the fault operating condition is determined based on the contribution value of the measurement data of each dimension in the processed current system operation data.

Specifically, the fault cause corresponding to the fault operating condition can be determined based on a magnitude of the contribution value of the measurement data of each dimension in the processed current system operation data, and according to a preset correspondence between the magnitude of the contribution value and the fault cause.

Optionally, one implementation manner of determining the fault cause corresponding to the fault operating condition is as follows. A contribution value corresponding to the measurement data of each dimension in the current system operation data before processing is determined based on the contribution value corresponding to the measurement data of each dimension in the processed current system operation data, and the fault cause corresponding to the fault operating condition is determined based on the contribution value corresponding to the measurement data of each dimension in the current system operation data before processing.

Specifically, the contribution values corresponding to the measurement data of respective dimensions in the processed current system operation data are compared, and the contribution values corresponding to the measurement data of the dimensions are arranged in a descending order. The contribution values corresponding to the measurement data of the preset dimensions (e.g., five) with relatively large values are selected. Then, an inverse feature engineering processing and an inverse normalization processing are performed on the selected measurement data of preset dimensions to determine the contribution value of the measurement data of each dimension in the current system operation data before processing. The measurement data of each dimension before processing indicates the fault cause. For example, if the determined contribution value of the measurement data of the nuclear density is large, then it is determined that the fault cause of the nuclear reactor is an abnormality of the nuclear density.

In the above embodiments, the contribution of the data of each dimension to the nuclear reactor fault are determined by using the current system operation data before processing and the processed current system operation data, and the fault cause corresponding to the fault operating condition is determined based on the contribution. Through the above solution, the fault cause can be implemented to specific data, so that the data source can be used as the fault cause, which greatly increases the accuracy of fault diagnosis.

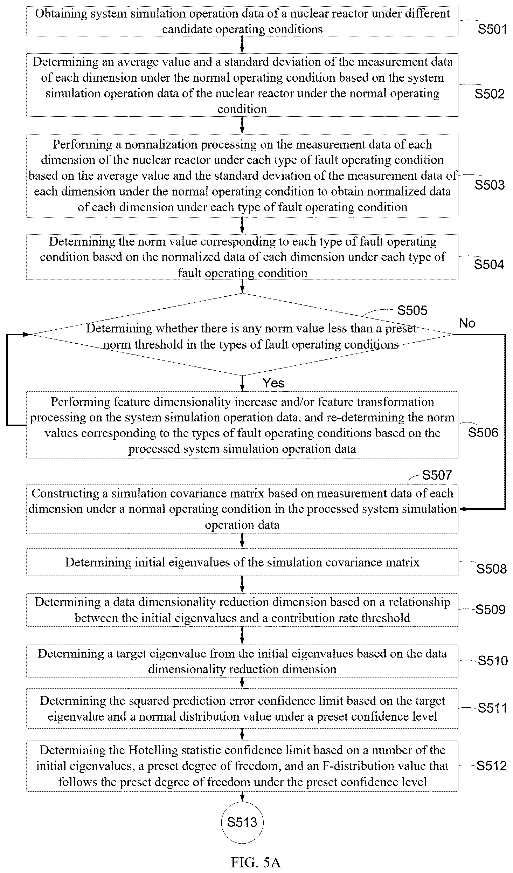

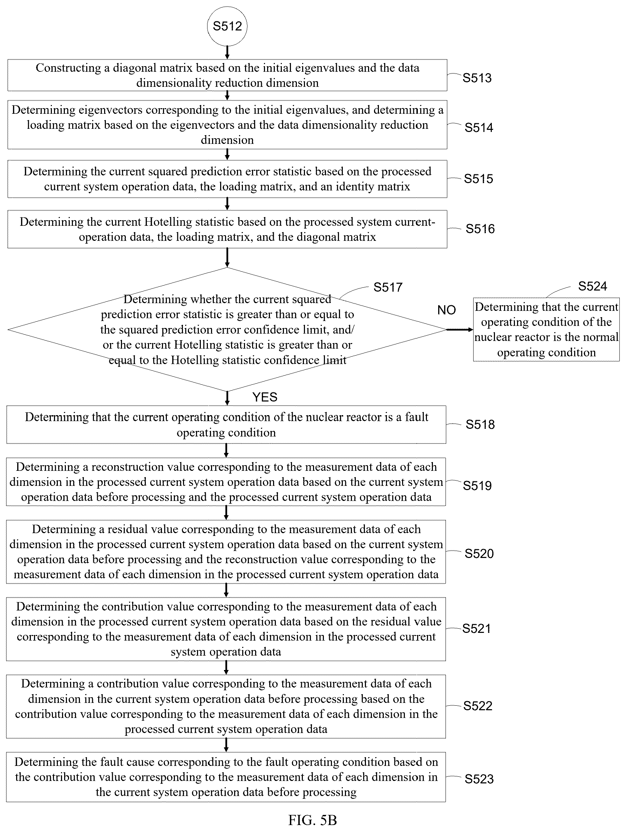

To more comprehensively describe the present solution, this embodiment provides an optional nuclear reactor fault diagnosis method, as shown in FIGS. 5A and 5B. (It should be noted that, due to the excessive length of the flowchart in this embodiment, it cannot be displayed on one page. Therefore, the flowchart of this embodiment is divided into FIGS. 5A and 5B, which are displayed on two separate pages.)

In the step S501, system simulation operation data of the nuclear reactor under different candidate operating conditions are obtained.

The candidate operating conditions include a normal operating condition and one or more types of fault operating conditions, and the system simulation operation data includes measurement data of at least one dimension.

In the step S502, an average value and a standard deviation of the measurement data of each dimension under the normal operating condition are determined based on the system simulation operation data of the nuclear reactor under the normal operating condition.

In the step S503, a normalization processing is performed on the measurement data of each dimension of the nuclear reactor under each type of fault operating condition based on the average value and the standard deviation of the measurement data of each dimension under the normal operating condition to obtain normalized data of each dimension under each type of fault operating condition.

In the step S504, a norm value corresponding to each type of fault operating condition is determined based on the normalized data of each dimension under each type of fault operating condition.

In the step S505, it is determined whether there is a norm value less than a preset norm threshold in respective types of fault operating conditions. If it is determined that there is a norm value less than the preset norm threshold in the types of fault operating conditions, the step S506 is performed. If not, the step S507 is performed.

In the step S506, feature dimensionality increase and/or feature transformation processing are performed on the system simulation operation data, and the norm values corresponding to the types of fault operating conditions are re-determined based on the processed system simulation operation data, and it returns to perform the step S505.

In the step S507, a simulation covariance matrix is constructed based on measurement data of each dimension under the normal operating condition in the processed system simulation operation data.

In the step S508, initial eigenvalues of the simulation covariance matrix are determined.

In the step S509, a data dimensionality reduction dimension is determined based on a relationship between the initial eigenvalues and the contribution rate threshold.

In the step S510, a target eigenvalue is determined from the initial eigenvalues based on the data dimensionality reduction dimension.

In the step S511, a squared prediction error confidence limit is determined based on the target eigenvalue and a normal distribution value under a preset confidence level.

In the step S512, a Hotelling statistic confidence limit is determined based on a number of the initial eigenvalues, a preset degree of freedom, and an F-distribution value that follows the preset degree of freedom under the preset confidence level.

The preset degree of freedom is determined based on the number of the initial eigenvalues and the data dimensionality reduction dimension.

In the step S513, a diagonal matrix is constructed based on the initial eigenvalues and the data dimensionality reduction dimension.

In the step S514, eigenvectors corresponding to the initial eigenvalues are determined, and a loading matrix is determined based on the eigenvectors and the data dimensionality reduction dimension.

In the step S515, the current squared prediction error statistic is determined based on the processed current system operation data, the loading matrix, and an identity matrix.

In the step S516, the current Hotelling statistic is determined based on the processed current system operation data, the loading matrix, and the diagonal matrix.

In the step S517, it is determined whether the current squared prediction error statistic is greater than or equal to the squared prediction error confidence limit, and/or the current Hotelling statistic is greater than or equal to the Hotelling statistic confidence limit. If it is determined that the current squared prediction error statistic is greater than or equal to the squared prediction error confidence limit, and/or the current Hotelling statistic is greater than or equal to the Hotelling statistic confidence limit, the step S518 is performed. If not, the step S524 is performed.

In the step S518, it is determined that the current operating condition of the nuclear reactor is a fault operating condition.

In the step S519, a reconstruction value corresponding to the measurement data of each dimension in the processed current system operation data is determined based on the current system operation data before processing and the processed current system operation data.

In the step S520, a residual value corresponding to the measurement data of each dimension in the processed current system operation data is determined based on the current system operation data before processing and the reconstruction value corresponding to the measurement data of each dimension in the processed current system operation data.

In the step S521, a contribution value corresponding to the measurement data of each dimension in the processed current system operation data is determined based on the residual value corresponding to the measurement data of each dimension in the processed current system operation data.

In the step S522, a contribution value corresponding to the measurement data of each dimension in the current system operation data before processing is determined based on the contribution value corresponding to the measurement data of each dimension in the processed current system operation data.

In the step S523, a fault cause corresponding to the fault operating condition is determined based on the contribution value corresponding to the measurement data of each dimension in the current system operation data before processing.

In the step S524, it is determined that the current operating condition of the nuclear reactor is the normal operating condition.

The specific processes of steps S501 to S524 described above can be referred to the description of the above method embodiments, and the implementation principles and technical effects are similar, which will not be repeated here.

It should be understood that although the individual steps in the flow charts involved in the embodiments as described above are shown sequentially as indicated by arrows, the steps are not necessarily performed sequentially in the order indicated by the arrows. Unless explicitly stated herein, the execution of these steps is not strictly limited in any order and these steps can be performed in any other order. Moreover, at least some of the steps in the flow charts involved in the embodiments as described above may include multiple sub-steps or multiple stages that are not necessarily performed simultaneously, but may be performed at different moments. The order in which these sub-steps or stages are performed is not necessarily sequential, and these sub-steps or stages may be performed in turn or alternately with at least some of other steps or at least some of sub-steps or stages in other steps.

Based on the same inventive concept, embodiments of the present application also provide a nuclear reactor fault diagnosis apparatus for implementing the nuclear reactor fault diagnosis method as described above. The solution to the problem provided by the apparatus is similar to the implementation of the method documented above, so the specific features in the one or more embodiments of the nuclear reactor fault diagnosis apparatus provided below may be understood with reference to the features of the nuclear reactor fault diagnosis method above and will not be repeated here.

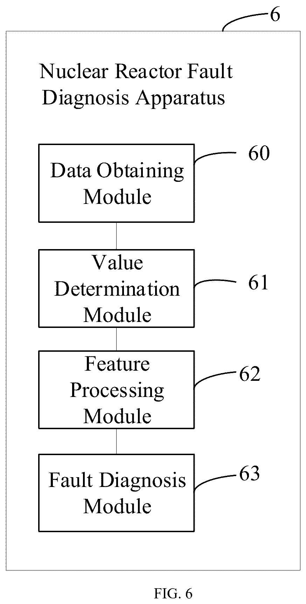

In an embodiment, as shown in FIG. 6, a nuclear reactor fault diagnosis apparatus 6 is provided, which includes a data obtaining module 60, a value determination module 61, a feature processing module 62, and a fault diagnosis module 63.

The data obtaining module 60 is configured to obtain system simulation operation data of a nuclear reactor under different candidate operating conditions. The candidate operating conditions include one or more types of fault operating conditions.

The value determination module 61 is configured to determine norm values corresponding to respective types of fault operating conditions based on the system simulation operation data.

The feature processing module 62 is configured to, in response to presence of any norm value among the norm values corresponding to the types of fault operating conditions being less than a preset norm threshold, perform a feature engineering processing on the system simulation operation data, and re-determine the norm values corresponding to the types of fault operating conditions based on the processed system simulation operation data until the norm values corresponding to the types of fault operating conditions are all greater than or equal to the preset norm threshold.

The fault diagnosis module 63 is configured to perform fault diagnosis on a current operating condition of the nuclear reactor based on the processed system simulation operation data and current system operation data of the nuclear reactor under the current operating condition.

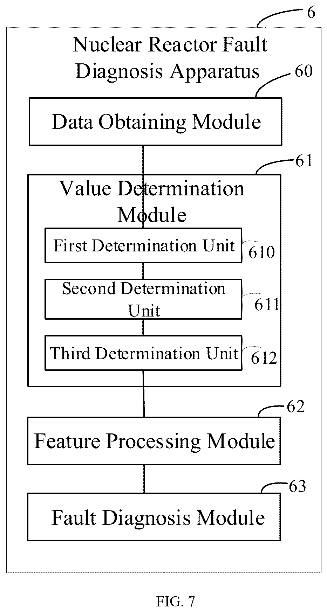

In another embodiment, the candidate operating conditions further include a normal operating condition, and the system simulation operation data includes measurement data of at least one dimension. As shown in FIG. 7, the above value determination module 61 in FIG. 6 further includes:

a first determination unit 610 configured to determine an average value and a standard deviation of the measurement data of each dimension under the normal operating condition based on the system simulation operation data of the nuclear reactor under the normal operating condition;

a second determination unit 611 configured to perform a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

a third determination unit 612 configured to determine the norm value corresponding to each type of fault operating condition based on the normalized data of each dimension under each type of fault operating condition.

In another embodiment, the above feature processing module 62 in FIG. 6 is further configured to perform feature dimensionality increase and/or feature transformation processing on the system simulation operation data.

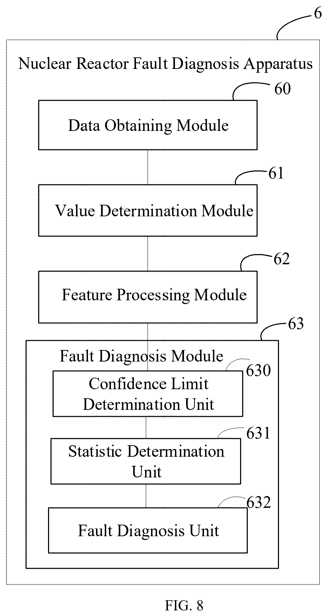

In another embodiment, as shown in FIG. 8, the above fault diagnosis module 63 in FIG. 6 includes:

a confidence limit determination unit 630 configured to determine a squared prediction error confidence limit and a Hotelling statistic confidence limit based on the processed system simulation operation data;

a statistic determination unit 631 configured to: perform a feature engineering processing on the current system operation data of the nuclear reactor under the current operating condition, and determine a current squared prediction error statistic and a current Hotelling statistic based on the processed current system operation data, wherein the feature engineering processing is performed on the system simulation operation data in the same manner as on the current system operation data; and

a fault diagnosis unit 632 configured to perform the fault diagnosis on the current operating condition of the nuclear reactor based on the current squared prediction error statistic, the current Hotelling statistic, the squared prediction error confidence limit and the Hotelling statistic confidence limit.

In another embodiment, the above confidence limit determination unit 630 in FIG. 8 further includes:

a matrix construction sub-unit 6300 configured to construct a simulation covariance matrix based on measurement data of each dimension under a normal operating condition in the processed system simulation operation data;

a first determination sub-unit 6301 configured to determine initial eigenvalues of the simulation covariance matrix;

a dimension determination sub-unit 6302 configured to determine a data dimensionality reduction dimension based on a relationship between the initial eigenvalues and a contribution rate threshold;

a second determination sub-unit 6303 configured to determine a target eigenvalue from the initial eigenvalues based on the data dimensionality reduction dimension;

a third determination sub-unit 6304 configured to determine the squared prediction error confidence limit based on the target eigenvalue and a normal distribution value under a preset confidence level; and

a fourth determination sub-unit 6305 configured to determine the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

In another embodiment, the above statistic determination unit 631 in FIG. 8 further includes:

a diagonal matrix determination sub-unit 6310 configured to construct a diagonal matrix based on the initial eigenvalues and the data dimensionality reduction dimension;

a loading matrix determination sub-unit 6311 configured to determine eigenvectors corresponding to the initial eigenvalues, and determine a loading matrix based on the eigenvectors and the data dimensionality reduction dimension;

a first determination sub-unit 6312 configured to determine the current squared prediction error statistic based on the processed current system operation data, the loading matrix, and an identity matrix; and

a second determination sub-unit 6313 configured to determine the current Hotelling statistic based on the processed current system operation data, the loading matrix, and the diagonal matrix.

In another embodiment, the above fault diagnosis unit 632 in FIG. 8 further includes:

an operating condition determination sub-unit 6320 configured to, in a case that the current squared prediction error statistic is greater than or equal to the squared prediction error confidence limit, and/or the current Hotelling statistic is greater than or equal to the Hotelling statistic confidence limit, determine that the current operating condition of the nuclear reactor is a fault operating condition;

a contribution value determination sub-unit 6321 configured to determine a contribution value of measurement data of each dimension in the processed current system operation data based on the current system operation data before processing and the processed current system operation data; and

a fault diagnosis sub-unit 6322 configured to determine a fault cause corresponding to the fault operating condition based on the contribution value of the measurement data of each dimension in the processed current system operation data.

In another embodiment, the contribution value determination sub-unit 6321 in the above embodiment is further configured to:

determine a reconstruction value corresponding to the measurement data of each dimension in the processed current system operation data based on the current system operation data before processing and the processed current system operation data; determine a residual value corresponding to the measurement data of each dimension in the processed current system operation data based on the current system operation data before processing and the reconstruction value corresponding to the measurement data of each dimension in the processed current system operation data; and determine the contribution value corresponding to the measurement data of each dimension in the processed current system operation data based on the residual value corresponding to the measurement data of each dimension in the processed current system operation data.

In another embodiment, the fault diagnosis sub-unit 6322 in the above embodiment is further configured to: determine a contribution value corresponding to the measurement data of each dimension in the current system operation data before processing based on the contribution value corresponding to the measurement data of each dimension in the processed current system operation data; and determine the fault cause corresponding to the fault operating condition based on the contribution value corresponding to the measurement data of each dimension in the current system operation data before processing.

The individual modules in the above nuclear reactor fault diagnosis apparatus can be implemented in whole or in part by software, hardware or a combination thereof. Each of the above modules may be embedded in or independent of a processor in a computer device in a form of hardware, or may be stored in a memory in the computer device in a form of software, so as to be called by the processor to perform the operations corresponding to each of the above modules.

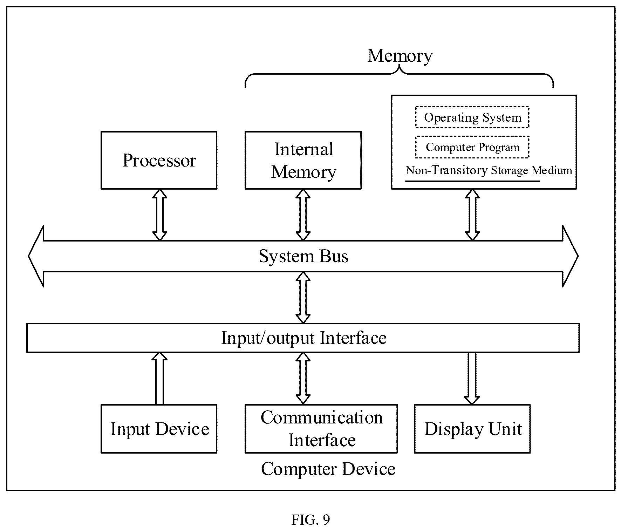

In an embodiment, a computer device is provided, which may be a terminal. A diagram illustrating an internal configuration of the computer device may be shown in FIG. 9. The computer device includes a processor, a memory, an input/output interface, a communication interface, a display unit, and an input device. The processor, the memory and the input/output interface are connected via a system bus, and the communication interface, the display unit and the input device are connected to the system bus via the input/output interface. The processor of the computer device is configured to provide computing and control capabilities. The memory of the computer device includes a non-transitory storage medium and an internal memory. The non-transitory storage medium stores operating systems and computer programs. The internal memory provides an environment for the operation of the operating systems and the computer programs in the non-transitory storage medium. The input/output interface of the computer device is configured to exchange information between the processor and external devices. The communication interface of the computer device is configured to communicate with external terminals in wired or wireless mode, which can be realized by WIFI, mobile cellular network, near field communication (NFC) or other technologies. The computer programs are executed by the processor in order to implement a nuclear reactor fault diagnosis method. The display unit of the computer device is configured to form a visually visible picture, which may be a display screen, a projection device or a virtual reality imaging device. The display screen may be an LCD or e-ink display, and the input device of the computer device may be a touch layer covered by the display screen, or a key, trackball or trackpad set on the housing of the computer device, or an external keyboard, trackpad or mouse, etc.

It should be understood by a person of ordinary skill in the art that the configuration illustrated in FIG. 9 is only a block diagram of part of the configuration related to the solution of the present application, and does not constitute a limitation on the computer device to which the solution of the present application is applied. Specifically, the computer device may include more or fewer components than those shown in the figure, or may combine some components, or may have a different arrangement of components.

In an embodiment, a computer device is provided, including a memory and a processor. The memory stores a computer program, and the processor, when executing the computer program, performs the following steps:

obtaining system simulation operation data of a nuclear reactor under different candidate operating conditions, wherein the candidate operating conditions include one or more types of fault operating conditions;

determining norm values corresponding to respective types of fault operating conditions based on the system simulation operation data;

in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and

performing fault diagnosis on a current operating condition of the nuclear reactor based on the processed system simulation operation data and current system operation data of the nuclear reactor under the current operating condition.

In an embodiment, the processor, when executing the computer program, further performs the following steps:

determining an average value and a standard deviation of the measurement data of each dimension under the normal operating condition based on the system simulation operation data of the nuclear reactor under the normal operating condition;

performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

determining the norm value corresponding to each type of fault operating condition based on the normalized data of each dimension under each type of fault operating condition.

In an embodiment, the processor, when executing the computer program, further performs the following steps: performing feature dimensionality increase and/or feature transformation processing on the system simulation operation data.

In an embodiment, the processor, when executing the computer program, further performs the following steps:

determining a squared prediction error confidence limit and a Hotelling statistic confidence limit based on the processed system simulation operation data;

performing a feature engineering processing on the current system operation data of the nuclear reactor under the current operating condition, and determining a current squared prediction error statistic and a current Hotelling statistic based on the processed current system operation data, wherein the feature engineering processing is performed on the system simulation operation data in the same manner as on the current system operation data; and

performing the fault diagnosis on the current operating condition of the nuclear reactor based on the current squared prediction error statistic, the current Hotelling statistic, the squared prediction error confidence limit and the Hotelling statistic confidence limit.

In an embodiment, the processor, when executing the computer program, further performs the following steps:

constructing a simulation covariance matrix based on measurement data of each dimension under a normal operating condition in the processed system simulation operation data;

determining initial eigenvalues of the simulation covariance matrix;

determining a data dimensionality reduction dimension based on a relationship between the initial eigenvalues and a contribution rate threshold;

determining a target eigenvalue from the initial eigenvalues based on the data dimensionality reduction dimension;

determining the squared prediction error confidence limit based on the target eigenvalue and a normal distribution value under a preset confidence level; and

determining the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

In an embodiment, the processor, when executing the computer program, further performs the following steps:

constructing a diagonal matrix based on the initial eigenvalues and the data dimensionality reduction dimension;

determining eigenvectors corresponding to the initial eigenvalues, and determining a loading matrix based on the eigenvectors and the data dimensionality reduction dimension;

determining the current squared prediction error statistic based on the processed current system operation data, the loading matrix, and an identity matrix; and

determining the current Hotelling statistic based on the processed current system operation data, the loading matrix, and the diagonal matrix.

In an embodiment, the processor, when executing the computer program, further performs the following steps:

in a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition;

determining a contribution value of measurement data of each dimension in the processed current system operation data based on the current system operation data before processing and the processed current system operation data; and

determining a fault cause corresponding to the fault operating condition based on the contribution value of the measurement data of each dimension in the processed current system operation data.

In an embodiment, the processor, when executing the computer program, further performs the following steps:

determining a reconstruction value corresponding to the measurement data of each dimension in the processed current system operation data based on the current system operation data before processing and the processed current system operation data;

determining a residual value corresponding to the measurement data of each dimension in the processed current system operation data based on the current system operation data before processing and the reconstruction value corresponding to the measurement data of each dimension in the processed current system operation data; and

determining the contribution value corresponding to the measurement data of each dimension in the processed current system operation data based on the residual value corresponding to the measurement data of each dimension in the processed current system operation data.

In an embodiment, the processor, when executing the computer program, further performs the following steps:

determining a contribution value corresponding to the measurement data of each dimension in the current system operation data before processing based on the contribution value corresponding to the measurement data of each dimension in the processed current system operation data; and

determining the fault cause corresponding to the fault operating condition based on the contribution value corresponding to the measurement data of each dimension in the current system operation data before processing.

In an embodiment, a computer-readable storage medium is provided, having a computer program stored thereon. The computer program, when executed by a processor, causes the processor to perform the following steps:

obtaining system simulation operation data of a nuclear reactor under different candidate operating conditions, wherein the candidate operating conditions include one or more types of fault operating conditions;

determining norm values corresponding to respective types of fault operating conditions based on the system simulation operation data;

in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and

performing fault diagnosis on a current operating condition of the nuclear reactor based on the processed system simulation operation data and current system operation data of the nuclear reactor under the current operating condition.

In an embodiment, the computer program, when executed by the processor, further causes the processor to perform the following steps:

determining an average value and a standard deviation of the measurement data of each dimension under the normal operating condition based on the system simulation operation data of the nuclear reactor under the normal operating condition;

performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

determining the norm value corresponding to each type of fault operating condition based on the normalized data of each dimension under each type of fault operating condition.

In an embodiment, the computer program, when executed by the processor, further causes the processor to perform the following steps:

performing feature dimensionality increase and/or feature transformation processing on the system simulation operation data.

In an embodiment, the computer program, when executed by the processor, further causes the processor to perform the following steps:

determining a squared prediction error confidence limit and a Hotelling statistic confidence limit based on the processed system simulation operation data;

performing a feature engineering processing on the current system operation data of the nuclear reactor under the current operating condition, and determining a current squared prediction error statistic and a current Hotelling statistic based on the processed current system operation data, wherein the feature engineering processing is performed on the system simulation operation data in the same manner as on the current system operation data; and performing the fault diagnosis on the current operating condition of the nuclear reactor based on the current squared prediction error statistic, the current Hotelling statistic, the squared prediction error confidence limit and the Hotelling statistic confidence limit.

In an embodiment, the computer program, when executed by the processor, further causes the processor to perform the following steps:

constructing a simulation covariance matrix based on measurement data of each dimension under a normal operating condition in the processed system simulation operation data;
determining initial eigenvalues of the simulation covariance matrix;
determining a data dimensionality reduction dimension based on a relationship between the initial eigenvalues and a contribution rate threshold;
determining a target eigenvalue from the initial eigenvalues based on the data dimensionality reduction dimension;
determining the squared prediction error confidence limit based on the target eigenvalue and a normal distribution value under a preset confidence level; and
determining the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

In an embodiment, the computer program, when executed by the processor, further causes the processor to perform the following steps:

constructing a diagonal matrix based on the initial eigenvalues and the data dimensionality reduction dimension;
determining eigenvectors corresponding to the initial eigenvalues, and determining a loading matrix based on the eigenvectors and the data dimensionality reduction dimension;
determining the current squared prediction error statistic based on the processed current system operation data, the loading matrix, and an identity matrix; and
determining the current Hotelling statistic based on the processed current system operation data, the loading matrix, and the diagonal matrix.

In an embodiment, the computer program, when executed by the processor, further causes the processor to perform the following steps:

in a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition;
determining a contribution value of measurement data of each dimension in the processed current system operation data based on the current system operation data before processing and the processed current system operation data; and
determining a fault cause corresponding to the fault operating condition based on the contribution value of the measurement data of each dimension in the processed current system operation data.

In an embodiment, the computer program, when executed by the processor, further causes the processor to perform the following steps:

determining a reconstruction value corresponding to the measurement data of each dimension in the processed current system operation data based on the current system operation data before processing and the processed current system operation data;
determining a residual value corresponding to the measurement data of each dimension in the processed current system operation data based on the current system operation data before processing and the reconstruction value corresponding to the measurement data of each dimension in the processed current system operation data; and
determining the contribution value corresponding to the measurement data of each dimension in the processed current system operation data based on the residual value corresponding to the measurement data of each dimension in the processed current system operation data.

In an embodiment, the computer program, when executed by the processor, further causes the processor to perform the following steps:

determining a contribution value corresponding to the measurement data of each dimension in the current system operation data before processing based on the contribution value corresponding to the measurement data of each dimension in the processed current system operation data; and

determining the fault cause corresponding to the fault operating condition based on the contribution value corresponding to the measurement data of each dimension in the current system operation data before processing.

In an embodiment, a computer program product is provided, including a computer program. The computer program, when executed by a processor, causes the processor to perform the following steps:

obtaining system simulation operation data of a nuclear reactor under different candidate operating conditions, wherein the candidate operating conditions include one or more types of fault operating conditions;

determining norm values corresponding to respective types of fault operating conditions based on the system simulation operation data;

in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and

performing fault diagnosis on a current operating condition of the nuclear reactor based on the processed system simulation operation data and current system operation data of the nuclear reactor under the current operating condition.

In an embodiment, the computer program, when executed by the processor, further causes the processor to perform the following steps:

determining an average value and a standard deviation of the measurement data of each dimension under the normal operating condition based on the system simulation operation data of the nuclear reactor under the normal operating condition;

performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

determining the norm value corresponding to each type of fault operating condition based on the normalized data of each dimension under each type of fault operating condition.

In an embodiment, the computer program, when executed by the processor, further causes the processor to perform the following steps:
performing feature dimensionality increase and/or feature transformation processing on the system simulation operation data.

In an embodiment, the computer program, when executed by the processor, further causes the processor to perform the following steps:

determining a squared prediction error confidence limit and a Hotelling statistic confidence limit based on the processed system simulation operation data;

performing a feature engineering processing on the current system operation data of the nuclear reactor under the current operating condition, and determining a current squared prediction error statistic and a current Hotelling statistic based on the processed current system operation data, wherein the feature engineering processing is performed on the system simulation operation data in the same manner as on the current system operation data; and

performing the fault diagnosis on the current operating condition of the nuclear reactor based on the current squared prediction error statistic, the current Hotelling statistic, the squared prediction error confidence limit and the Hotelling statistic confidence limit.

In an embodiment, the computer program, when executed by the processor, further causes the processor to perform the following steps:

constructing a simulation covariance matrix based on measurement data of each dimension under a normal operating condition in the processed system simulation operation data;

determining initial eigenvalues of the simulation covariance matrix;

determining a data dimensionality reduction dimension based on a relationship between the initial eigenvalues and a contribution rate threshold;

determining a target eigenvalue from the initial eigenvalues based on the data dimensionality reduction dimension;

determining the squared prediction error confidence limit based on the target eigenvalue and a normal distribution value under a preset confidence level; and

determining the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

In an embodiment, the computer program, when executed by the processor, further causes the processor to perform the following steps:

constructing a diagonal matrix based on the initial eigenvalues and the data dimensionality reduction dimension;

determining eigenvectors corresponding to the initial eigenvalues, and determining a loading matrix based on the eigenvectors and the data dimensionality reduction dimension;

determining the current squared prediction error statistic based on the processed current system operation data, the loading matrix, and an identity matrix; and

determining the current Hotelling statistic based on the processed current system operation data, the loading matrix, and the diagonal matrix.

In an embodiment, the computer program, when executed by the processor, further causes the processor to perform the following steps:

in a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition;

determining a contribution value of measurement data of each dimension in the processed current system operation data based on the current system operation data before processing and the processed current system operation data; and

determining a fault cause corresponding to the fault operating condition based on the contribution value of the measurement data of each dimension in the processed current system operation data.

In an embodiment, the computer program, when executed by the processor, further causes the processor to perform the following steps:

determining a reconstruction value corresponding to the measurement data of each dimension in the processed current system operation data based on the current system operation data before processing and the processed current system operation data;

determining a residual value corresponding to the measurement data of each dimension in the processed current system operation data based on the current system operation data before processing and the reconstruction value corresponding to the measurement data of each dimension in the processed current system operation data; and

determining the contribution value corresponding to the measurement data of each dimension in the processed current system operation data based on the residual value corresponding to the measurement data of each dimension in the processed current system operation data.

In an embodiment, the computer program, when executed by the processor, further causes the processor to perform the following steps:

determining a contribution value corresponding to the measurement data of each dimension in the current system operation data before processing based on the contribution value corresponding to the measurement data of each dimension in the processed current system operation data; and

determining the fault cause corresponding to the fault operating condition based on the contribution value corresponding to the measurement data of each dimension in the current system operation data before processing.

A person of ordinary skill in the art may understand that implementation of all or part of the processes in the methods of the above embodiments may be completed by instructing the relevant hardware through a computer program. The computer program may be stored in a non-transitory computer-readable storage medium. When the computer program is executed, it may include the processes of the respective methods according to the foregoing embodiments. Any reference to memory, database or other medium used of the embodiments provided in the present application may include at least one of a non-transitory or a transitory memory. The non-transitory memory may include a read-only memory (ROM), a magnetic tape, a floppy disk, a flash memory, an optical memory, a high-density embedded non-transitory memory, a resistive random-access memory (ReRAM), a magneto resistive random-access memory (MRAM), a ferroelectric random-access memory (FRAM), a phase change memory (PCM), or a graphene memory, etc. The transitory memory may include a random-access memory (RAM) or an external cache memory, etc. As an illustration rather than a limitation, the random-access memory may be in various forms, such as a static random-access memory (SRAM) or a dynamic random-access memory (DRAM), etc. The databases involved in the embodiments provided by the present application may include at least one of a relational database and a non-relational database. The non-relational database may include, but is not limited to, a blockchain-based distributed database, etc. The processor involved in the embodiments provided by the present application may be, but is not limited to, a general purpose processor, a central processor, a graphics processor, a digital signal processor, a programmable logic device, a data processing logic device based on quantum computation, and the like.

The technical features in the above embodiments may be combined arbitrarily. For concise description, not all possible combinations of the technical features in the above embodiments are described. However, provided that they do not conflict with each other, all combinations of the technical features are to be considered to be within the scope of protection of the present application.

The above-mentioned embodiments only describe several implementations of the present application, and their description is specific and detailed, but should not be understood as a limitation on the protection scope of the present application. It should be noted that, for a person of ordinary skill in the art, various variations and improvements can be further made without departing from the conception of the present application, and these all fall within the protection scope of the present application. Therefore, the protection scope of the present application should be subject to the appended claims.

**Claims**

1. A nuclear reactor fault diagnosis method, **characterized by** comprising:

   obtaining system simulation operation data of a nuclear reactor under different candidate operating conditions, wherein the candidate operating conditions comprise one or more types of fault operating conditions;
   determining norm values corresponding to respective types of fault operating conditions based on the system simulation operation data;
   in response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold; and
   performing fault diagnosis on a current operating condition of the nuclear reactor based on the processed system simulation operation data and current system operation data of the nuclear reactor under the current operating condition.

2. The nuclear reactor fault diagnosis method of claim 1, wherein the candidate operating conditions further comprise a normal operating condition, the system simulation operation data comprises measurement data of at least one dimension, and determining the norm values corresponding to the types of fault operating conditions based on the system simulation operation data comprises:

   determining an average value and a standard deviation of the measurement data of each dimension under the normal operating condition based on the system simulation operation data of the nuclear reactor under the normal operating condition;
   performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition; and

determining the norm value corresponding to each type of fault operating condition based on the normalized data of each dimension under each type of fault operating condition.

3.  The nuclear reactor fault diagnosis method of claim 1, wherein performing the feature engineering processing on the system simulation operation data comprises:
    performing feature dimensionality increase and/or feature transformation processing on the system simulation operation data.

4.  The nuclear reactor fault diagnosis method of any one of claims 1 to 3, wherein performing the fault diagnosis on the current operating condition of the nuclear reactor based on the processed system simulation operation data and the current system operation data of the nuclear reactor under the current operating condition comprises:

    determining a squared prediction error confidence limit and a Hotelling statistic confidence limit based on the processed system simulation operation data;
    performing a feature engineering processing on the current system operation data of the nuclear reactor under the current operating condition, and determining a current squared prediction error statistic and a current Hotelling statistic based on the processed current system operation data, wherein the feature engineering processing is performed on the system simulation operation data in the same manner as on the current system operation data; and
    performing the fault diagnosis on the current operating condition of the nuclear reactor based on the current squared prediction error statistic, the current Hotelling statistic, the squared prediction error confidence limit and the Hotelling statistic confidence limit.

5.  The nuclear reactor fault diagnosis method of claim 4, wherein determining the squared prediction error confidence limit and the Hotelling statistic confidence limit based on the processed system simulation operation data comprises:

    constructing a simulation covariance matrix based on measurement data of each dimension under a normal operating condition in the processed system simulation operation data;
    determining initial eigenvalues of the simulation covariance matrix;
    determining a data dimensionality reduction dimension based on a relationship between the initial eigenvalues and a contribution rate threshold;
    determining a target eigenvalue from the initial eigenvalues based on the data dimensionality reduction dimension;
    determining the squared prediction error confidence limit based on the target eigenvalue and a normal distribution value under a preset confidence level; and
    determining the Hotelling statistic confidence limit based on a number of the initial eigenvalues, a preset degree of freedom, and an F-distribution value that follows the preset degree of freedom under the preset confidence level, wherein the preset degree of freedom is determined based on the number of the initial eigenvalues and the data dimensionality reduction dimension.

6.  The nuclear reactor fault diagnosis method of claim 4, wherein determining the current squared prediction error statistic and the current Hotelling statistic based on the processed current system operation data comprises:

    constructing a diagonal matrix based on the initial eigenvalues and the data dimensionality reduction dimension;
    determining eigenvectors corresponding to the initial eigenvalues, and determining a loading matrix based on the eigenvectors and the data dimensionality reduction dimension;
    determining the current squared prediction error statistic based on the processed current system operation data, the loading matrix, and an identity matrix; and
    determining the current Hotelling statistic based on the processed current system operation data, the loading matrix, and the diagonal matrix.

7.  The nuclear reactor fault diagnosis method of claim 4, wherein performing the fault diagnosis on the current operating condition of the nuclear reactor based on the current squared prediction error statistic, the current Hotelling statistic, the squared prediction error confidence limit, and the Hotelling statistic confidence limit comprises:

    in a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition;

determining a contribution value of measurement data of each dimension in the processed current system operation data based on the current system operation data before processing and the processed current system operation data; and
determining a fault cause corresponding to the fault operating condition based on the contribution value of the measurement data of each dimension in the processed current system operation data.

8. The nuclear reactor fault diagnosis method of claim 7, wherein determining the contribution value of the measurement data of each dimension in the processed current system operation data based on the current system operation data before processing and the processed current system operation data comprises:

determining a reconstruction value corresponding to the measurement data of each dimension in the processed current system operation data based on the current system operation data before processing and the processed current system operation data;
determining a residual value corresponding to the measurement data of each dimension in the processed current system operation data based on the current system operation data before processing and the reconstruction value corresponding to the measurement data of each dimension in the processed current system operation data; and
determining the contribution value corresponding to the measurement data of each dimension in the processed current system operation data based on the residual value corresponding to the measurement data of each dimension in the processed current system operation data.

9. The nuclear reactor fault diagnosis method of claim 7, wherein determining the fault cause corresponding to the fault operating condition based on the contribution value of the measurement data of each dimension in the processed current system operation data comprises:

determining a contribution value corresponding to the measurement data of each dimension in the current system operation data before processing based on the contribution value corresponding to the measurement data of each dimension in the processed current system operation data; and
determining the fault cause corresponding to the fault operating condition based on the contribution value corresponding to the measurement data of each dimension in the current system operation data before processing.

10. A nuclear reactor fault diagnosis apparatus, **characterized by** comprising:

a data obtaining module configured to obtain system simulation operation data of a nuclear reactor under different candidate operating conditions, wherein the candidate operating conditions comprise one or more types of fault operating conditions;
a value determination module configured to determine norm values corresponding to respective types of fault operating conditions based on the system simulation operation data;
a feature processing module configured to in response to presence of any norm value among the norm values corresponding to the types of fault operating conditions being less than a preset norm threshold, perform a feature engineering processing on the system simulation operation data, and re-determine the norm values corresponding to the types of fault operating conditions based on the processed system simulation operation data until the norm values corresponding to the types of fault operating conditions are all greater than or equal to the preset norm threshold; and
a fault diagnosis module configured to perform fault diagnosis on a current operating condition of the nuclear reactor based on the processed system simulation operation data and current system operation data of the nuclear reactor under the current operating condition.

11. A computer device comprising a memory and a processor, the memory storing a computer program, **characterized in that** the processor, when executing the computer program, implements the steps of the method of any one of claims 1 to 9.

12. A computer-readable storage medium having a computer program stored thereon, **characterized in that**, when the computer program is executed by a processor, the steps of the method of any one of claims 1 to 9 are implements.

13. A computer program product comprising a computer program, **characterized in that**, when the computer program is executed by a processor, the steps of the method of any one of claims 1 to 9 are implements.

Memory

| Operating System |
| Computer Program |
| Database |

Non-Transitory Storage Medium

Processor

Internal Memory

System Bus

Input/output Interface

Communication Interface

Computer Device

FIG. 1

Obtaining system simulation operation data of a nuclear reactor under different candidate operating conditions — S201

Determining norm values corresponding to respective types of fault operating conditions based on the system simulation operation data — S202

In response to presence of any norm value among the norm values corresponding to the types of fault operating conditions being less than a preset norm threshold, performing a feature engineering processing on the system simulation operation data, and re-determining the norm values corresponding to the types of fault operating conditions based on the processed system simulation operation data until the norm values corresponding to the types of fault operating conditions are all greater than or equal to the preset norm threshold — S203

Performing fault diagnosis on a current operating condition of the nuclear reactor based on the processed system simulation operation data and current system operation data of the nuclear reactor under the current operating condition — S204

FIG. 2

Determining a squared prediction error confidence limit and a Hotelling statistic confidence limit based on the processed system simulation operation data — S301

Performing a feature engineering processing on the current system operation data of the nuclear reactor under the current operating condition, and determining a current squared prediction error statistic and a current Hotelling statistic based on the processed current system operation data — S302

Performing the fault diagnosis on the current operating condition of the nuclear reactor based on the current squared prediction error statistic, the current Hotelling statistic, the squared prediction error confidence limit and the Hotelling statistic confidence limit — S303

FIG. 3

In a case that the current squared prediction error statistic is greater than or equal to the squared prediction error confidence limit, and/or the current Hotelling statistic is greater than or equal to the Hotelling statistic confidence limit, determining that the current operating condition of the nuclear reactor is a fault operating condition

S401

Determining a contribution value of measurement data of each dimension in the processed current system operation data based on the current system operation data before processing and the processed current system operation data

S402

Determining a fault cause corresponding to the fault operating condition based on the contribution value of the measurement data of each dimension in the processed current system operation data

S403

FIG. 4

Obtaining system simulation operation data of a nuclear reactor under different candidate operating conditions — S501

↓

Determining an average value and a standard deviation of the measurement data of each dimension under the normal operating condition based on the system simulation operation data of the nuclear reactor under the normal operating condition — S502

↓

Performing a normalization processing on the measurement data of each dimension of the nuclear reactor under each type of fault operating condition based on the average value and the standard deviation of the measurement data of each dimension under the normal operating condition to obtain normalized data of each dimension under each type of fault operating condition — S503

↓

Determining the norm value corresponding to each type of fault operating condition based on the normalized data of each dimension under each type of fault operating condition — S504

↓

Determining whether there is any norm value less than a preset norm threshold in the types of fault operating conditions — S505    No

↓ Yes

Performing feature dimensionality increase and/or feature transformation processing on the system simulation operation data, and re-determining the norm values corresponding to the types of fault operating conditions based on the processed system simulation operation data — S506

S507

Constructing a simulation covariance matrix based on measurement data of each dimension under a normal operating condition in the processed system simulation operation data

↓

Determining initial eigenvalues of the simulation covariance matrix — S508

↓

Determining a data dimensionality reduction dimension based on a relationship between the initial eigenvalues and a contribution rate threshold — S509

↓

Determining a target eigenvalue from the initial eigenvalues based on the data dimensionality reduction dimension — S510

↓

Determining the squared prediction error confidence limit based on the target eigenvalue and a normal distribution value under a preset confidence level — S511

↓

Determining the Hotelling statistic confidence limit based on a number of the initial eigenvalues, a preset degree of freedom, and an F-distribution value that follows the preset degree of freedom under the preset confidence level — S512

↓

( S513 )

FIG. 5A

( S512 )

Constructing a diagonal matrix based on the initial eigenvalues and the data dimensionality reduction dimension — S513

Determining eigenvectors corresponding to the initial eigenvalues, and determining a loading matrix based on the eigenvectors and the data dimensionality reduction dimension — S514

Determining the current squared prediction error statistic based on the processed current system operation data, the loading matrix, and an identity matrix — S515

Determining the current Hotelling statistic based on the processed system current-operation data, the loading matrix, and the diagonal matrix — S516

Determining whether the current squared prediction error statistic is greater than or equal to the squared prediction error confidence limit, and/ or the current Hotelling statistic is greater than or equal to the Hotelling statistic confidence limit — S517

NO → Determining that the current operating condition of the nuclear reactor is the normal operating condition — S524

YES

Determining that the current operating condition of the nuclear reactor is a fault operating condition — S518

Determining a reconstruction value corresponding to the measurement data of each dimension in the processed current system operation data based on the current system operation data before processing and the processed current system operation data — S519

Determining a residual value corresponding to the measurement data of each dimension in the processed current system operation data based on the current system operation data before processing and the reconstruction value corresponding to the measurement data of each dimension in the processed current system operation data — S520

Determining the contribution value corresponding to the measurement data of each dimension in the processed current system operation data based on the residual value corresponding to the measurement data of each dimension in the processed current system operation data — S521

Determining a contribution value corresponding to the measurement data of each dimension in the current system operation data before processing based on the contribution value corresponding to the measurement data of each dimension in the processed current system operation data — S522

Determining the fault cause corresponding to the fault operating condition based on the contribution value corresponding to the measurement data of each dimension in the current system operation data before processing — S523

FIG. 5B

6

Nuclear Reactor Fault
Diagnosis Apparatus

Data Obtaining
Module — 60

Value
Determination — 61
Module

Feature
Processing — 62
Module

Fault Diagnosis — 63
Module

FIG. 6

6

Nuclear Reactor Fault
Diagnosis Apparatus — 60

Data Obtaining Module

61

Value Determination
Module

First Determination Unit 610

Second Determination
Unit 611

Third Determination Unit 612

62

Feature Processing Module

63

Fault Diagnosis Module

FIG. 7

FIG. 8

Memory

Operating System

Computer Program

Non-Transitory Storage Medium

Processor

Internal
Memory

System Bus

Input/output Interface

Input Device

Communication
Interface

Display Unit

Computer Device

FIG. 9

## INTERNATIONAL SEARCH REPORT

| International application No. |
| --- |
| **PCT/CN2023/125870** |

| A. | CLASSIFICATION OF SUBJECT MATTER |
| --- | --- |

G06F18/2433(2023.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS: CNTXT; VEN; DWPI; USTXT; WOTXT; EPTXT; CNKI: 故障, 错误, 异常, 核, 范数, 距离, 升维, 特征变换, 放大, 平方预测误差, 霍特林统计量, fault, error, exception, nuclear, norm, distance, dimension, raise, feature transform, amplify, squared prediction error, Hotelling Statistics

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116467665 A (CHINA GENERAL NUCLEAR POWER CO., LTD. et al.) 21 July 2023 (2023-07-21)<br>description, paragraphs 4-336, and figures 1-9 | 1-13 |
| A | CN 107301884 A (HARBIN ENGINEERING UNIVERSITY) 27 October 2017 (2017-10-27)<br>description, paragraphs 39-42, and figures 1-2 | 1-13 |
| A | CN 111881176 A (NAVAL UNIVERSITY OF ENGINEERING OF PLA) 03 November 2020 (2020-11-03)<br>description, paragraphs 99-103 | 1-13 |
| A | CN 112199890 A (HARBIN ENGINEERING UNIVERSITY) 08 January 2021 (2021-01-08)<br>entire document | 1-13 |
| A | CN 114358172 A (CHINA GENERAL NUCLEAR POWER CO., LTD. et al.) 15 April 2022 (2022-04-15)<br>entire document | 1-13 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 January 2024** | **31 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/125870** |

**C.    DOCUMENTS CONSIDERED TO BE RELEVANT**

| Category* | Citation of document, with indication, where appropriate, of the relevant passages | Relevant to claim No. |
|---|---|---|
| A | CN 115392339 A (CHINA ELECTRIC POWER RESEARCH INSTITUTE CO., LTD. et al.) 25 November 2022 (2022-11-25) entire document | 1-13 |
| A | JP 5849167 B1 (HITACHI POWER SOLUTIONS CO., LTD.) 27 January 2016 (2016-01-27) entire document | 1-13 |

Form PCT/ISA/210 (second sheet) (July 2022)

**INTERNATIONAL SEARCH REPORT**
Information on patent family members

International application No.

**PCT/CN2023/125870**

| Patent document cited in search report | | | Publication date (day/month/year) | Patent family member(s) | | | Publication date (day/month/year) |
|---|---|---|---|---|---|---|---|
| CN | 116467665 | A | 21 July 2023 | None | | | |
| CN | 107301884 | A | 27 October 2017 | CN | 107301884 | B | 16 July 2019 |
| CN | 111881176 | A | 03 November 2020 | CN | 111881176 | B | 07 September 2021 |
| CN | 112199890 | A | 08 January 2021 | CN | 112199890 | B | 17 March 2023 |
| CN | 114358172 | A | 15 April 2022 | None | | | |
| CN | 115392339 | A | 25 November 2022 | None | | | |
| JP | 5849167 | B1 | 27 January 2016 | JP | 2016200949 | A | 01 December 2016 |

Form PCT/ISA/210 (patent family annex) (July 2022)

**REFERENCES CITED IN THE DESCRIPTION**

**Patent documents cited in the description**

- CN 202310459222